Europäisches Patentamt

(19) European Patent Office

Office européen des brevets

(11) Publication number: **0 156 282**
**B1**

(12) **EUROPEAN PATENT SPECIFICATION**

(45) Date of publication of patent specification: **15.03.89**

(21) Application number: **85103122.9**

(22) Date of filing: **02.12.82**

(51) Int. Cl.⁴: **H 02 P 7/628**

(60) Publication number of the earlier application in accordance with Art. 76 EPC: **0 083 326**

(54) Method and device for controlling a brushless alternating current motor.

(30) Priority: **18.12.81 CH 8097/81**

(43) Date of publication of application:
**02.10.85 Bulletin 85/40**

(45) Publication of the grant of the patent:
**15.03.89 Bulletin 89/11**

(84) Designated Contracting States:
**AT BE CH DE FR GB IT LI LU NL**

(56) References cited:
**FR-A-2 439 503**
**GB-A-1 020 214**
**US-A-3 402 336**
**US-A-4 051 418**

(73) Proprietor: **Institut Cerac S.A.**
**Chemin des Larges Pièces**
**CH-1024 Ecublens (CH)**

(72) Inventor: **Hartwig, Carl Sverker Magnusson**
**Gripsvallsvägen 7**
**S-183 46 Täby (SE)**
Inventor: **Ljung, Erik Anders**
**Färgargardstorget 16**
**S-116 43 Stockholm (SE)**
Inventor: **Obel, Erik Martin**
**Bergavägen 5**
**S-182 33 Danderyd (SE)**

(74) Representative: **Johansson, Lars-Erik et al**
**Institut CERAC S.A. Chemin des Larges Pièces**
**CH-1204 Ecublens (CH)**

Courier Press, Leamington Spa, England.

## Description

The present invention relates to a method and a device for controlling a brushless alternating current motor driven by an inverter connected to a constant voltage direct current supply.

In prior art solutions for controlling motors of the above mentioned kind it has been customary to sense the current supplied to the motor terminals. Since the current supplied to the motor terminals contains both active and reactive components more or less sophisticated devices have been used to obtain some information about the efficiency of the operation of the motor. Examples of this are given in U.S. patents 3 619 749 and 4 207 510.

In another prior art solution, GB—A—1 020 214, the direct current supplied to the inverter is sensed. This control signal is then used to control the inverter such that the motor speed is held substantially constant.

According to the present invention, which is defined in the appended claims, a rectified mean value of the direct current supplied to the inverter is sensed and divided by a frequency controlling signal obtained from the direct current to create a voltage controlling signal corresponding to the torque demand of the motor. The voltage controlling signal is supplied to a regulator to control the voltage supplied to the motor. This ensures high efficiency of operation of the motor.

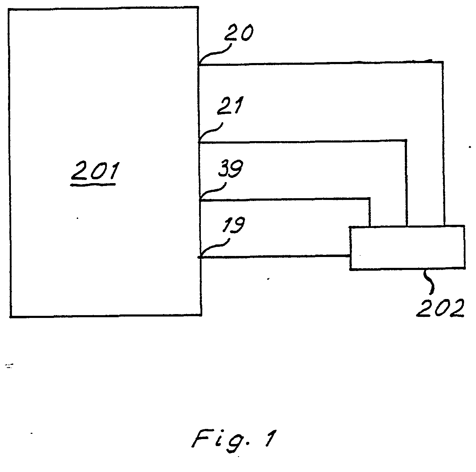

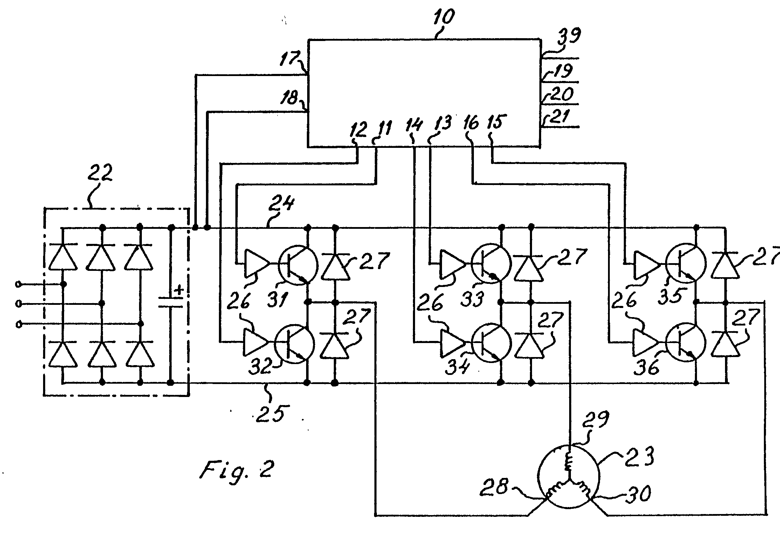

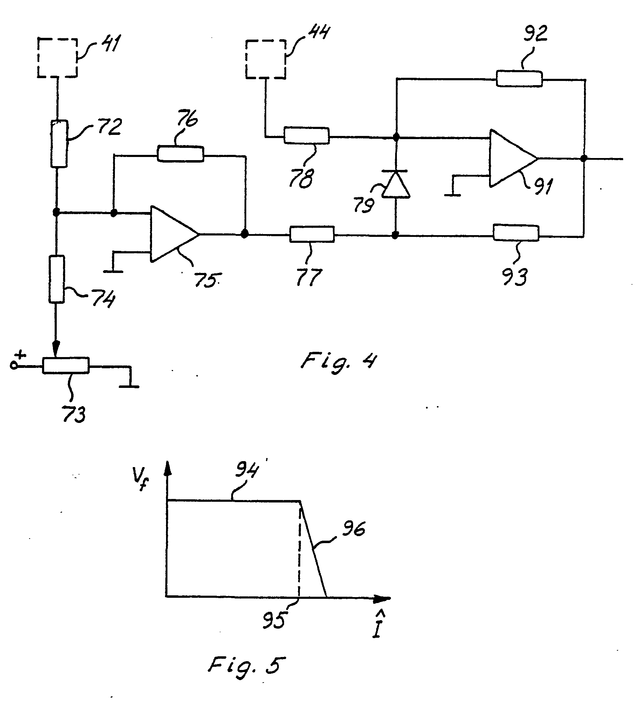

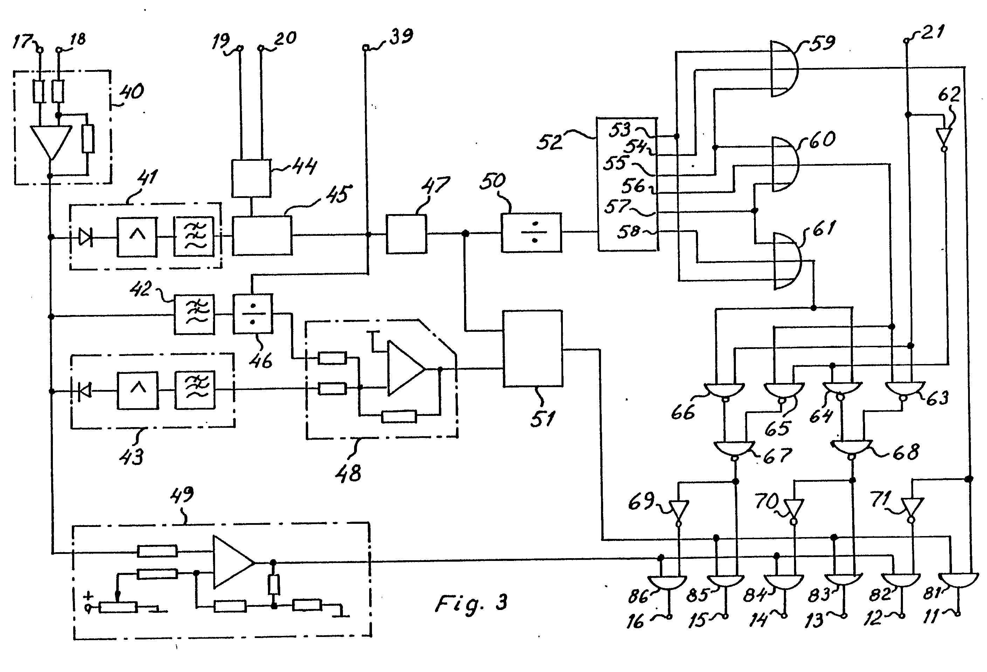

An embodiment of the invention is described below with reference to the accompanying drawings in which Figure 1 shows a washing machine with part of the control system. Figure 2 shows the motor drive system. Figure 3 shows the controller of Figure 2. Figure 4 shows a regulator of Figure 3. Figure 5 shows a transfer function for the regulator according to Figure 4.

The embodiment of the invention shown in Figure 1 comprises a washing machine 201. This is only an example. The invention can be applied to virtually any machine using a brushless alternating current motor. The washing machine of Figure 1 includes the motor, the inverter and other power circuits feeding the motor and the major part of the control system. These parts are described more in detail in connection with Figures 2—5. Washing machine 201 is provided with an input 19 for the supply of a frequency demand signal. This signal is delivered by a timer 202 in which the washing program is stored. The frequency demand signal is the basic demand for rotational speed. Timer 202 also delivers start signals to input 20. Washing machine 201 is further provided with an input 21 for the selection of rotational direction and an output 39 which delivers a signal corresponding to the rotational speed of the motor. When the rotational speed of the motor in the washing machine is substantially zero output 39 becomes logical zero. Only then is the signal fed to input 21 allowed to change its logical state so that a start signal from timer 202 will cause rotation in the opposite direction.

The drive system shown in Figure 2 comprises a threephase rectifier 22 which is connected to a standard fixed frequency mains supply. The rectifier delivers direct current of substantially constant voltage to conductors 24, 25, which constitute a positive 24 and a negative 25 terminal of a direct current supply for an inverter. The inverter comprises six switching elements 31—36 for successively connecting motor terminals 28, 29, 30 on a brushless alternating current motor 23 to the positive terminal 24 and the negative terminal 25 of the direct current supply. The switching elements are in the drawing shown as transistors but could, of course, be combinations of thyristors or other elements. A diode 27 is placed in anti-parallel over each transistor to take care of reactive currents at the switching off of the transistor. To control the inverter, control signals are supplied from outputs 11—16 on a controller 10 as shown in Figure 3. These control signals are supplied via amplifiers 26 to the base of respective transistor. Controller 10 is provided with inputs 17, 18 through which the direct current in conductor 24 is sensed. Controller 10 is further provided with an output 39 and inputs 19, 20, 21. Output 39 is only used if it during operation is desired to change the direction of rotation of the motor. The direction of rotation is selected by applying a logical signal to input 21. If rotation in only one direction is desired input 21 is connected either to a positive voltage or common. The speed of motor 23 may be changed by variation of a voltage applied to input 19. If, as for instance in a grinding machine, it is desired to drive the motor at a certain speed, input 19 is connected to a suitable voltage corresponding to the desired speed. Input 20 is intended for receiving a start/stop signal by which rotation or no rotation is chosen.

Controller 10, which is shown more in detail in Figure 3, comprises a sensing means 40 for sensing the direct current in conductor 24. This current is presented as a voltage between inputs 17 and 18. The output signal of sensing means 40 is applied to a first peak detector 41, a low-pass filter 42, a second peak detector 43 and a comparator 49. Peak detectors 41 and 43 comprise diodes to react on positive and negative signals respectively. The peak detectors also comprise low-pass filters. First peak detector 41 preferably has a time constant of about 4/f where f is the maximum fundamental frequency of the current supplied to motor 23. The cut-off frequency, −3dB, of peak detector 41 is preferably about 0.1 f. Lowpass filter 42 preferably has about the same cut-off frequency. Second peak detector 43 preferably has a time constant of about 1/f and a cut-off frequency of about 0.5 f.

The peak value signal from peak detector 41 is supplied to a first regulator 45, which is shown more in detail in Figure 4. Input signals from inputs 19 and 20 are supplied to a means 44 in form of a ramp generator. Ramp generator 44 comprises one or two operational amplifiers connected as integrators to supply regulator 45 with an increasing ramp voltage at motor start acceleration and a decreasing ramp voltage at motor stop deceleration. In this way it is possible to avoid that the normal speed maximum load current is exceeded when the motor is started or stopped. A change in the speed demand signal at input 19 is also integrated by ramp generator 44. Thus it takes some time before the output of ramp generator 44 becomes fully adapted to the input signals.

The peak value signal from first peak detector 41 is applied to one of the inputs of operational amplifier 75 via resistor 72. This signal is compared with a reference signal preset on variable resistor 73 and fed to the amplifier via resistor 74. The amplifier is provided with a feed-back resistor 76. The output signal of amplifier 75 is via a resistor 77 applied to diode 79. The output signal from ramp generator 44 is via resistor 78 supplied to one of the inputs of operational amplifier 91. Amplifier 91 is provided with a first feed-back resistor 92 and a second feed-back resistor 93 in series with diode 79. Resistor 93 has a much lower resistance than resistor 92. Preferably the ratio is about 1/20. If the output signal from amplifier 75, measured at diode 79, is more negative than the output signal from amplifier 91, measured at diode 79, is positive, diode 79 is reverse-biased. The closed loop amplification of amplifier 91 is then high. Regulator 45 then operates according to line 94 in Figure 5, assuming constant signal from ramp generator 44. If the signal from first peak detector 41 increases, the output signal from amplifier 75 becomes less negative and at a certain signal level, level 95 in Figure 5, which is preset on resistor 73, diode 79 becomes forward-biased. The closed loop amplification of amplifier 91 is now drastically reduced so that first regulator 45 delivers a frequency controlling signal according to line 96 in Figure 5. This signal becomes zero at about 120% of the signal at level 95. The frequency controlling signal from the output of amplifier 91 is delivered to a voltage-controlled oscillator 47, output 39 and an analog divider 46, e.g. Analog Devices AD 534. The voltage-controlled oscillator produces an output signal whose frequency is proportional to the input voltage.

The rectified mean value signal obtained from low-pass filter 42 corresponds to the power supplied to motor 23 because the voltage of the direct current supply 24, 25 is substantially constant. This signal is supplied to divider 46 where it is divided with the frequency controlling signal, which is the demand signal for rotational speed of motor 23. The output signal of divider 46 will thus correspond to the torque demand from motor 23. This output signal, first voltage controlling signal, is supplied to a second regulator 48. The negative peak value signal, second voltage controlling signal, obtained from second peak detector 43 is also supplied to regulator 48 so that the output signal of regulator 48 becomes proportional to the difference between the first and the second voltage controlling signals. The negative peak value signal from peak detector 43 corresponds to the degree of magnetization of motor 23. This signal is obtained from negative pulses which are fed back to the direct current source when the transistors 31—36 are switched off. By controlling the level of these negative pulses it is possible to obtain a predetermined level of magnetization of the motor allowing both a high power to weight ratio and the avoiding of oversaturation, which would give unacceptable losses.

If the signal from sensing means 40 exceeds a predetermined level the output of comparator 49 becomes low. As a result outputs 12, 14 and 16 of AND gates 82, 84 and 86 respectively will be low. This means that the lower transistors 32, 34 and 36 of the inverter will be turned off so that the motor terminals 28, 29 and 30 will be cut off from the negative terminal 25 of the direct current supply. This cutting off thus functions as transient current protection for the inverter.

The output signal from voltage-controlled oscillator 47 is supplied to a timer 51, preferably an industrial timer of standard type 555, and to a divider 50. Divider 50 is preferably a programmable counter which delivers a pulse train having a frequency which is equal to the frequency of the input signal divided by a chosen constant. Timer 51 delivers a pulse train whose frequency is equal to the frequency of the output signal from voltage-controlled oscillator 47. The pulse width is controlled by the output signal from second regulator 48. This pulse train is supplied to AND gates 81, 83 and 85. The pulse train from divider 50 is supplied as clock signal to ring counter 52. In the ring counter a 1 and five 0's are stored. The 1 is shifted around by the pulse train from output 53 through 58 and back to 53. This makes one period of the fundamental frequency of the current supplied to a motor 23. Outputs 53—58 of ring counter 52 are decoded by OR gates 59, 60 and 61. The output of each of these gates is high half the time and low half the time. A logic signal inverter 62 and NAND gates 63—68 are provided for selecting direction of rotation of motor 23. The output signals of gates 59, 60 and 61 are supplied to AND gates 81—86 for controlling the actuation of switching transistors 31—36 in the inverter. The inputs of gates 82, 84 and 86 are provided with logic signal inverters 71, 70 and 69 respectively.

Because the pulse width of the pulses leaving timer 51 remains constant independent of frequency if the signal from regulator 48 is constant, the mean value over half a period of the fundamental frequency of the voltage applied to any of the motor terminals will change simultaneously with the frequency as required by basic electromagnetic laws. Additional control of the mean value voltage is obtained by variation of the pulse width, which is controlled by regulator 48.

## Claims

1. A method of controlling a brushless alternating current motor (23) driven by an inverter (31—36) connected to a direct current supply (24, 25), whereby alternating current to be supplied to motor terminals (28, 29, 30) on the brushless alternating current motor is created by controlled actuation of switching means in the inverter to successively connect the motor terminals to a positive terminal (24) and a negative terminal (25) of the direct current supply, and the direct current supplied to the inverter (31—36) is sensed to obtain a signal corresponding to the sensed current, characterized in that said current detection signal is passed through a peak detector (41) having a predetermined time constant to obtain a peak value signal, that said peak value signal is supplied to a first regulator (45) to obtain a frequency controlling signal, that said current detection signal is passed through a low-pass filter (42) to obtain a rectified mean value signal, that said rectified mean value signal is supplied to a divider (46) where the rectified mean value signal is divided by said frequency controlling signal to obtain a voltage controlling signal, that said voltage controlling signal is supplied to a second regulator (48) such that an output signal of said second regulator changes its amplitude in the same direction as said voltage controlling signal and that said output signal controls said alternating current.

2. A device for controlling a brushless alternating current motor comprising an inverter connected to a direct current supply (24, 25), said inverter comprising switching means (31—36) for successively connecting motor terminals (28, 29, 30) on the brushless alternating current motor (23) to a positive terminal (24) and a negative terminal (25) of the direct current supply, and sensing means (40) for sensing the direct current, characterized in that said sensing means is connected to a peak detector (41) having a predetermined time constant, said peak detector producing a peak value signal corresponding to the sensed current, said peak detector being connected to a first regulator (45) for producing a frequency controlling signal, and a low-pass filter (42) being connected to said sensing means (40), said low-pass filter producing a rectified mean value signal corresponding to the sensed current, a divider (46) connected to said low-pass filter and to said first regulator (45), said divider producing a voltage controlling signal by dividing the rectified mean value signal by the frequency controlling signal and a second regulator (48) connected to said divider for producing an output signal which changes its amplitude in the same direction as said voltage controlling signal, whereby said output signal controls the time said switching means (31—36) are turned on.

**Patentansprüche**

1. Verfahren zur Regelung eines bürstenlosen Wechselstrommotors, welcher von einem an eine Gleichstromquelle angeschlossenen Wechselrichter angetrieben wird, wobei der den Motorklemmen am bürstenlosen Wechselstrommotor zuzuführende Wechselstrom durch geregelte Betätigung von Schalteinrichtungen im Wechselrichter zwecks aufeinanderfolgender Verbindung der Motorklemmen mit einer positiven und einer negativen Klemme der Gleichstromquelle erzeugt wird, wobei der dem Wechselrichter zugeführte Gleichstrom erfaßt wird, um ein dem erfaßten Strom entsprechendes Signal zu erhalben, dadurch gekennzeichnet, daß das Signal des erfaßten Stromes durch einen Spitzendetektor (41) mit einer vorgegebenen Zeitkonstante geleitet wird, um ein Spitzenwertsignal zu erhalten, welches einem erstean Regler (45) eingespeist wird, um ein frequenzregelndes Signal zu erhalten, daß das Signal des erfaßten Stromes durch ein Tiefpaßfilter (42) geleitet wird, um ein gleichgerichtetes Mittelwertsignal zu erhalten, welches einem Teiler (46) eingespeist wird, in welchem das gleichgerichtet Mittelwertsignal durch das frequenzregelnde Signal geteilt wird, um ein spannungsregelndes Signal zu erhalten, und daß dieses letztgenannte Signal in einen zweiten Regler (48) eingespeist wird, sodaß ein Ausgangssignal dieses zweiten Reglers seine Amplitude in der gleichen Richtung ändert wie das spannungsregelnde Signal und daß dieses Ausgangssignal den Wechselstrom regelt.

2. Gerät zur Regelung eines bürstenlosen Wechselstrommotors mit einem an eine Gleichstromquelle angeschlossenen Wechselrichter, wobei der Wechselrichter Schalteinrichtungen aufweist, durch welche Motorklemmen am bürstenlosen Wechselstrommotor nacheinander mit einer positiven und einer negativen Klemme der Gleichstromquelle verbunden sind, und mit einer Einrichtung zur Erfassung des Gleichstroms, dadurch gekennzeichnet, daß die Einrichtung (40) zur Erfassung des Gleichstroms mit einem Spitzendetektor (41) mit einer vorgegebenen Zeitkonstante verbunden ist, welcher ein dem erfaßten Strom entsprechendes Spitzenwertsignal erzeugt, wobei dieser Spitzendetektor mit einem ersten Regler (45) zur Erzeugung eines frequenzregelnden Signals verbunden ist, daß ein Tiefpaßfilter (42) mit der Einrichtung (40) zum Erfassen des Gleichstroms verbunden ist, um ein diesem erfaßten Gleichstrom entsprechendes gleichgerichtetes Mittelwertsignal zu erzeugen, daß mit diesem Tiefpaßfilter ein Teiler (46) verbunden ist, welcher durch Teilung des gleichgerichteten Mittelwertsignals durch das frequenzregelnde Signal ein spannungsregelndes Signal erzeugt, und daß mit dem Teiler ein zweiter Regler (48) verbunden ist, welcher ein Ausgangssignal erzeugt, welches seine Amplitude in der gleichen Richtung wie das spannungsregelnde Signal ändert, wodurch mittels dieses Ausgangssignals die Zeit regelbar ist, zu welcher die Schalteinrichtungen (31—36) des Wechselrichters eingeschaltet werden.

**Revendications**

1. Procédé de commande d'un moteur à courant alternatif sans balai (23) entraîné par un inverseur (31 à 36) branché à une alimentation de courant continu (24, 25), de façon que le courant alternatif à fournir aux bornes de moteur (28, 29, 30) du moteur à courant alternatif sans balai, soit créé par la manoeuvre contrôlée de moyens de commutation se trouvant dans l'inverseur, pour brancher successivement les bornes du moteur à une borne positive (24) et à une borne négative (25) de l'alimentation de courant continu, et de façon que le courant continu fourni à l'inverseur (31 à 36) soit détecté pour obtenir un signal correspondant au courant détecté, procédé caractérisé en ce qu'on fait passer ce signal de courant détecté dans un détecteur de crête (41) présentant une constante de temps prédéterminée, pour obtenir un signal de valeur crête, en ce que ce signal de valeur crête est appliqué à un premier régulateur (45) pour obtenir un signal de commande de fréquence, en ce qu'on fait passer ce signal de courant détecté dans un filtre passe-bas (42) pour obtenir un signal de valeur moyenne redressée, en ce que ce signal de valeur moyenne redressée est appliqué à un diviseur (46) dans lequel le signal de valeur moyenne redressée est divisé par le signal de commande de fréquence pour obtenir un signal de commande de tension, en ce que ce signal de commande de tension est appliqué à un second régulateur (48) de façon que le signal de sortie de ce second régulateur change d'amplitude dans le même sens que le signal de commande de tension et de façon que ce signal de sortie commande le courant alternatif.

2. Dispositif de commande d'un moteur à courant alternatif sans balai comprenant un inverseur branché à une alimentation de courant continu (24, 25), cet inverseur comprenant des moyens de commutation (31 à 36) pour brancher successivement les bornes de moteur (28, 29, 30) du moteur à courant alternatif sans balai (23) à une borne positive (24) et à une borne négative (25) de l'alimentation de courant continu, et des moyens de détection (40) destinés à détecter le courant continu, dispositif caractérisé en ce que les moyens de détection sont branchés à un détecteur de crête (41) présentant une constante de temps prédéterminée, ce détecteur de crête fournissant un signal de valeur crête correspondant au courant détecté, ce détecteur de crête étant branché à un premier régulateur (45) pour produire un signal de commande de fréquence; et en ce qu'un filtre passe-bas (42) est branché aux moyens de détection (40), ce filtre passe-bas produisant un signal de valeur moyenne redressée correspondant au courant détecté, un diviseur (46) étant branché à ce filtre passe-bas et au premier régulateur (45), ce diviseur produisant un signal de commande de tension en divisant le signal de valeur moyenne redressée par le signal de commande de fréquence et un second régulateur (48) étant branché à ce diviseur pour produire un signal de sortie changeant d'amplitude dans le même sens que le signal de commande de tension, ce qui permet ainsi au signal de sortie de commander l'instant où les moyens de commutation (31 à 36) sont allumés.

Fig. 1

Fig. 2

EP 0 156 282 B1

Fig. 4

Fig. 5

Fig. 3

EP 0 156 282 B1